# EUROPÄISCHE PATENTSCHRIFT

(11) **EP 0 949 285 B1**
(45) Veröffentlichungstag und Bekanntmachung des Hinweises auf die Patenterteilung: **12.06.2002**
(21) Anmeldenummer: 99105588.0
(22) Anmeldetag: 18.03.1999
(51) Int. Cl.: C08G 18/79, C08G 18/78, C08G 18/48

(54) **Verfahren zur Herstellung von Polyurethanschaumstoffen**
Process for manufacturing polyurethane foam
Procédé pour la fabrication de mousses de polyuréthane

(30) Priorität: 25.03.1998 DE 19813107
(43) Veröffentlichungstag der Anmeldung: 13.10.1999
(73) Patentinhaber: BASF AKTIENGESELLSCHAFT, 67056 Ludwigshafen (DE)
(72) Erfinder: Scherzer, Dietrich Dr., 67433 Neustadt (DE); Treuling, Ulrich Dr., 64625 Bensheim (DE); Wagner, Klaus, 67258 Hessheim (DE); Illguth, Rolf, 67069 Ludwigshafen (DE); Chakrabarti, Sarbananda, 68169 Mannheim (DE)

(56) Entgegenhaltungen:
- EP-A- 0 275 010
- EP-A- 0 299 122
- EP-A- 0 361 334
- US-A- 3 954 825

## Beschreibung

Die Erfindung betrifft Verfahren zur Herstellung von Schaumstoffen auf der Basis von Polyisocyanat-Polyadditionsprodukten durch Umsetzung von Isocyanaten mit gegenüber Isocyanaten reaktiven Verbindungen mit einem Molekulargewicht von 400 bis 8000 in Gegenwart von Treibmitteln, Katalysatoren sowie gegebenenfalls Kettenverlängerungs- und/oder Vernetzungsmitteln mit einem Molekulargewicht <400, Hilfsmitteln und/oder Zusatzstoffen sowie Schaumstoffe auf der Basis von Polyisocyanat-Polyadditionsprodukten, die nach diesem Verfahren herstellbar sind.

Die Herstellung von Schaumstoffen auf der Basis von Polyisocyanat-Polyadditionsprodukten, üblicherweise Polyurethan- und gegebenenfalls Polyisocyanauratprodukten, durch Umsetzung von Isocyanaten mit gegenüber Isocyanaten reaktiven Verbindungen in Gegenwart von Treibmitteln, Katalysatoren sowie gegebenenfalls Hilfsmitteln und/oder Zusatzstoffen ist vielfach beschrieben worden. Üblicherweise werden zur Herstellung von Schaumstoffen auf der Basis von Polyisocyanat-Polyadditionsprodukten aromatische Diisocyanate verwendet, die mit geeigneten gegenüber Isocyanaten reaktiven Verbindungen umgesetzt werden. Nachteilig bei solchermaßen hergestellten Schäumen wirkt sich deren Tendenz zur Verfärbung bei Lichteinwirkung und Lagerung sowie bei einigen Anwendungen deren hydrophober Charakter aus.

Lichtechte Schaumstoffe werden üblicherweise auf Basis von aromatischen Isocyanaten und UV-Stabilisatoren hergestellt. Nachteilig dabei ist, daß diese UV-Stabilisatoren ausgesprochen teuer und auch nur für eine begrenzte Zeit wirksam sind. Schaumstoffe hergestellt aus aliphatischen Isocyanaten sind bislang lediglich für sehr spezielle Anwendungen bekannt. In WO 89/05830 werden Polyurethan-Netzwerke hergestellt aus Polyesterolen und Lysindiisocyanat beschrieben. Die Herstellung solcher Polyurethane ist allerdings aufwendig und für einige Anwendungen unmöglich. Polyurethane auf der Basis von aliphatischen Isocyanaten werden auch in US 4 018 636, US 4 263 070 und US 3 281 378 beschrieben, doch enthalten diese Schriften keine brauchbare Lehre zur Herstellung von geschäumten Polyurethanen.

Gegebenenfalls geschäumte Polyurethane auf der Basis von aliphatischen Isocyanaten werden in EP-A 210 566 und EP-A 275 010 beschrieben. Nachteilig an diesen technischen Lehren wirkt sich der hohe Gehalt an flüchtigen monomeren aliphatischen Isocyanaten (EP-A 275 010) bzw. der geringe Gehalt an Isocyanatgruppen (EP-A 210 566), die für die Treibreaktion mit Wasser benötigt werden, aus.

Der vorliegenden Erfindung lag die Aufgabe zugrunde, ein Verfahren zur Herstellung von Schaumstoffen auf der Basis von Polyisocyanat-Polyadditionsprodukten durch Umsetzung von Isocyanaten mit gegenüber Isocyanaten reaktiven Verbindungen in Gegenwart von Treibmitteln und Katalysatoren sowie gegebenenfalls Hilfsmitteln und/oder Zusatzstoffen zu entwickeln, nach dem Schaumstoffe erhältlich sind, die auch bei längerer Lagerung unter UV-Einwirkung nicht zu Verfärbungen neigen und die einen hydrophileren Charakter als die nach dem Stand der Technik bekannten Schäume auf der Basis aromatischer Isocyanate aufweisen.

Diese Aufgabe wurde erfindungsgemäß dadurch gelöst, daß man,
i) Isocyanate mit Isocyanurat- und/oder Biuretstrukturen einsetzt,
   als gegenüber Isocyanaten reaktive Verbindungen
ii) mindestens ein Di-und/oder Polyalkohol mit einem Molekulargewicht von 400 bis 8000 und mit mindestens 50% primären Hydroxylgruppen, bezogen auf alle in der Verbindung enthaltenen Hydroxylgruppen,
iii) mindestens eine Verbindung mit mindestens einer primären Amingruppe,
   sowie gegebenenfalls Diole und/oder Triole mit Molekulargewichten <400 als Kettenverlängerungs- und/oder Vernetzungsmittel einsetzt, wobei man die Umsetzung in Gegenwart von
iv) mindestens einem tertiären Amin als Katalysator und/oder
v) mindestens einem Metallsalz als Katalysator
   sowie
vi) Wasser
durchführt.

Als Isocyanate (i) mit Isocyanurat- und/oder Biuretstrukturen kommen die an sich bekannten aliphatischen und/oder cycloaliphatischen Diisocyanate in Frage, die nach allgemein bekannten Verfahren biuretisiert und/oder cyanuratisiert worden sein können und mindestens eine, bevorzugt mindestens zwei freie Isocyanatgruppen aufweisen, besonders bevorzugt drei freie Isocyanatgruppen aufweisen. Durch diese Trimerisierung wird das Molekulargewicht der aliphatischen Isocyanate verdreifacht und die Funktionalität erhöht.

Im einzelnen seien beispielhaft genannt: Alkylendiisocyanate mit 4 bis 12 Kohlenstoffatomen im Alkylenrest, wie 1,12-Dodecandiisocyanat, 2-Ethyl-tetramethylendiisocyanat-1,4, 2-Methylpentamethylendiisocyanat-1,5, Tetramethylendiisocyanat-1,4, Lysinesterdiisocyanate (LDI) und/oder Hexamethylendiisocyanat-1,6 (HDI); cycloaliphatische Diisocyanate wie Cyclohexan-1,3- und 1,4-diisocyanat sowie beliebige Gemische dieser Isomeren, 2,4-und 2,6-Hexahydrotoluylendiisocyanat sowie die entsprechenden Isomerengemische, 4,4'-, 2,2'- und 2,4'-Dicyclohexylmethandiisocyanat sowie die entsprechenden Isomerengemische und/oder 1-Isocyanato-3,3,5-trimethyl-5-isocyanatomethylcyclohexan (IPDI). Bevorzugt setzt man als (i) isocyanuratisiertes und/oder biuretisiertes Hexamethylen-1,6-diisocyanat, 1-Isocyanato-3,3,5-trimethyl-5-isocyanatomethylcyclohexan und/oder Lysinesterdiisocyanat ein.

Die Trimerisierung der Isocyanate zur Herstellung der Isocyanate mit Isocyanuratstruktur kann bei üblichen Temperaturen in Gegenwart bekannter Katalysatoren, beispielsweise Phosphinen und/oder Phospholinderivaten, Aminen, Alkalisalzen, Metallverbindungen und/oder Mannichbasen erfolgen. Trimerisierte Isocyanate enthaltend Isocyanuratstrukturen sind zudem kommerziell erhältlich.
Isocyanate mit Biuretstrukturen können nach allgemein bekannten Verfahren beispielsweise durch Reaktion von den genannten Diisocyanaten mit Wasser oder beispielsweise Diaminen hergestellt werden, wobei als Zwischenprodukte ein Harnstoffderivat gebildet wird. Auch biuretisierte Isocyanate sind kommerziell erhältlich.

Die Isocyanate mit Isocyanurat- und/oder Biuretstrukturen können zusammmen mit weiteren Isocyanaten, vorzugsweise organischen Diisocyanaten in dem erfindungsgemäßen Verfahren eingesetzt werden. Als weitere Isocyanate kommen die bereits genannten aliphatischen und cycloaliphatischen Diisocyanate sowie aromatische Di- und Polyisocyanate, wie z.B. 2,4- und 2,6-Toluylendiisocyanat und die entsprechenden Isomerengemische, 4,4'-, 2,4'- und 2,2'-Diphenylmethandiisocyanat und die entsprechenden Isomerengemische, Mischungen aus 4,4'- und 2,2'-Diphenylmethandiisocyanaten, Polyphenylpolymethylen-polyisocyanate, Mischungen aus 4,4'-, 2,4'- und 2,2'-Diphenylmethandiisocyanaten und Polyphenylpolymethylen-polyisocyanaten (Roh-MDI) und Mischungen aus Roh-MDI und Toluylendiisocyanaten in Betracht. Außerdem können zusätzlich zu den erfindungsgemäßen Isocyanaten mit Isocyanurat- und/oder Biuretstrukturen Ester-, Harnstoff-, Allophanat-, Carbodiimid-, Uretdion- und/oder Urethangruppen enthaltende Di- und/oder Polyisocyanate in dem erfindungsgemäßen Verfahren eingesetzt werden. Im einzelnen kommen beispielsweise in Betracht: Urethangruppen enthaltende organische Polyisocyanate mit NCO-Gehalten von 33,6 bis 15 Gew.-%, vorzugsweise von 31 bis 21 Gew.-%, bezogen auf das Gesamtgewicht, beispielsweise mit niedermolekularen Diolen, Triolen, Dialkylenglykolen, Trialkylenglykolen oder Polyoxyalkylenglykolen mit Molekulargewichten bis 6000, insbesondere mit Molekulargewichten bis 1500, modifiziertes 4,4'-Diphenylmethandiisocyanat, modifizierte 4,4'- und 2,4'-Diphenylmethandiisocyanatmischungen, modifiziertes Roh-MDI oder 2,4- bzw. 2,6-Toluylendiisocyanat, wobei als Di- bzw. Polyoxyalkylenglykole, die einzeln oder als Gemische eingesetzt werden können, beispielsweise genannt seien: Diethylen-, Dipropylenglykol, Polyoxyethylen-, Polyoxypropylen- und Polyoxypropylenpolyoxyethenglykole, -triole und/oder -tetrole. Geeignet sind auch NCO-Gruppen enthaltende Prepolymere mit NCO-Gehalten von 25 bis 3,5 Gew.-%, vorzugsweise von 21 bis 14 Gew.-%, bezogen auf das Gesamtgewicht, hergestellt aus den nachfolgend beschriebenen Polyester- und/oder vorzugsweise Polyetherpolyolen und 4,4'-Diphenylmethandiisocyanat, Mischungen aus 2,4'- und 4,4'-Diphenylmethandiisocyanat, 2,4- und/oder 2,6-Toluylendiisocyanaten oder Roh-MDI. Bewährt haben sich ferner flüssige, Carbodiimidgruppen enthaltende Polyisocyanate mit NCO-Gehalten von 33,6 bis 15, vorzugsweise 31 bis 21 Gew.-%, bezogen auf das Gesamtgewicht, z.B. auf Basis von 4,4'-, 2,4'- und/oder 2,2'-Diphenylmethandiisocyanat und/oder 2,4- und/oder 2,6-Toluylendiisocyanat. Die modifizierten Polyisocyanate können miteinander oder mit unmodifizierten organischen Polyisocyanaten wie z.B. 2,4'-, 4,4'-Diphenylmethandiisocyanat, Roh-MDI, 2,4-und/oder 2,6-Toluylendiisocyanat gegebenenfalls gemischt werden.

Vorzugsweise werden die Isocyanate mit Isocyanurat- und/oder Biuretstrukturen zusammen mit aliphatischen und/oder cycloaliphatischen Diisocyanaten, wobei bevorzugt 50 bis 100% der im erfindungsgemäßen Verfahren eingesetzten NCO-Gruppen durch die Isocyanate mit Isocyanurat- und/oder Biuretstrukturen bereitgestellt werden. Besonders bevorzugt werden die Isocyanate mit Isocyanurat- und/oder Biuretstrukturen als alleinige Verbindungen mit Isocyanatgruppen in dem erfindungsgemäßen Verfahren verwendet.

Als gegenüber Isocyanaten reaktive Verbindungen werden erfindungsgemäß die folgenden Komponenten (ii) und (iii) verwendet:
ii) mindestens ein Polyalkohol mit einem Molekulargewicht von 400 bis 8000 und mit mindestens 50%, bevorzugt mindestens 60 %, besonders bevorzugt 80 bis 100 %, primären Hydroxylgruppen, bezogen auf alle in der Verbindung enthaltenen Hydroxylgruppen,
iii) mindestens eine Verbindung mit mindestens einer primären Amingruppe.
sowie gegebenenfalls als weitere Komponente Diole und/oder Triole mit Molekulargewichten <400 als Kettenverlängerungs- und/oder Vernet zungsmittel.

Die Polyole (ii) enthalten per Definition keine primären Amingruppen.

Die im Folgenden beispielhaft dargestellten Polyole beziehen sich, soweit sie mindestens 50 % primäre Hydroxylgruppen aufweisen, auf die erfindungsgemäßen Polyole (ii) und ansonsten auf Polyole, mit einem Molekulargewicht von 400 bis 8000, die gegebenenfalls zusätzlich zu den erfindungsgemäßen Polyolen (ii) verwendet werden können.

Im Folgenden wird als "insgesamt eingesetzte gegenüber Isocyanaten reaktive Verbindungen" die Summe aus den erfindungsgemäßen Komponenten (ii) und (iii), den gegebenenfalls zusätzlich zu (ii) eingesetzten Polyolen mit einem Molekulargewicht von 400 bis 8000 und gegebenenfalls den Diolen und/oder Triolen mit einem Molekulargewicht von von <400 bezeichnet.

Als Polyole (ii) werden zweckmäßigerweise solche mit einer Funktionalität von 2 bis 8, vorzugsweise 2 bis 6, und einem Molekulargewicht von 400 bis 8000, vorzugsweise von 400 bis 3000, verwendet. Der Einsatz hängt von den gewünschten Eigenschaften des herzustellenden Polyurethanschaumstoffes ab. Bewährt haben sich z.B. Polyole ausgewählt aus der Gruppe der Polyetherpolyole, Polyesterpolyole, Polythioether-polyole, hydroxylgruppenhaltigen Polyacetale und hydroxylgruppenhaltigen aliphatischen Polycarbonate oder Mischungen aus mindestens zwei der genannten Polyole. Vorzugsweise Anwendung finden Polyesterpolyole und/oder Polyetherpolyole. Der Hydroxylzahl der Polyhydroxylverbindungen beträgt dabei in aller Regel 28 bis 850 mg KOH/g und vorzugsweise 35 bis 600 mg KOH/g.

Als Polyolkomponenten werden dabei für starre Schäume bevorzugt hochfunktionelle Polyole, insbesondere Polyetherpolyole auf Basis hochfunktioneller Alkohole, Zuckeralkohole und/oder Saccharide als Startermoleküle, für flexible Schäume 2- und/oder 3-funktionelle Polyether- und/oder Polyesterpolyole auf Basis Glyzerin und/oder Trimethylolpropan und/oder Glykolen als Startermoleküle bzw. zu veresternde Alkohole eingesetzt.

Die Herstellung der Polyetherpolyole kann nach einer bekannten Technologie erfolgen. Entsprechend der Anwendung werden die notwendigen Startsubstanzen gemischt, mit basischem Katalysator, insbesondere Alkali- bzw. Erdalkalihydroxiden, versetzt und bei erhöhten Temperaturen und Drücken mit Alkylenoxiden, insbesondere Ethylen- und/oder Propylenoxid, umgesetzt. Zur Erzeugung von primären Hydroxylgruppen weisen die solchermaßen hergestellten Polyetherpolyalkohole endständige Ethylenoxideinheiten auf.

Nach der Synthese wird der Katalysator durch Säureneutralisation, Destillation und Filtration entfernt. Als Säuren werden vor allem die beiden anorganischen Säuren Salzsäure und/oder Phosphorsäure wegen der genauen Steuerung des Äquivalenzpunktes und der technologisch einfachen Entfernung von eventuellen Säureüberschüssen verwendet.

Als Polyole (ii) können somit Polyetherpolyole verwendet werden, die nach bekannten Verfahren hergestellt werden, beispielsweise durch anionische Polymerisation mit Alkalihydroxiden, wie z. B. Natrium- oder Kaliumhydroxid oder Alkalialkoholaten, wie z. B. Natriummethylat, Natrium- oder Kaliumethylat oder Kaliumisopropylat, als Katalysatoren und unter Zusatz mindestens eines Startermoleküls, das 2 bis 8, vorzugsweise 2 bis 6, reaktive Wasserstoffatome gebunden enthält, oder durch kationische Polymerisation mit Lewis-Säuren, wie Antimonpentachlorid, Borfluorid-Etherat u.a. oder Bleicherde, als Katalysatoren aus einem oder mehreren Alkylenoxiden mit 2 bis 4 Kohlenstoffatomen im Alkylenrest.

Geeignete Alkylenoxide zur Herstellung der Polyole sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Bevorzugt werden Alkylenoxide verwendet, die zu primären Hydroxylgruppen in dem Polyol führen. Besonders bevorzugt werden als Polyole solche eingesetzt, die zum Abschluß der Alkoxylierung mit Ethylenoxid alkoxyliert wurden und damit primäre Hydroxylgruppen aufweisen.

Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3-bzw. 1,4-Butylendiamin, 1,2-, 1,3-, 1,4-, 1,5- und 1,6-Hexamethylendiamin, Phenylendiamine, 2,3-, 2,4- und 2,6-Toluylendiamin und 4,4'-, 2,4'- und 2,2'-Diamino-diphenylmethan.

Als Startermoleküle kommen ferner in Betracht: Alkanolamine, wie z.B. Ethanolamin, N-Methyl- und N-Ethyl-ethanolamin, Dialkanolamine, wie z.B. Diethanolamin, N-Methyl- und N-Ethyl-diethanolamin, und Trialkanolamine, wie z.B. Triethanolamin, und Ammoniak. Vorzugsweise verwendet werden mehrwertige, insbesondere zwei- und/oder dreiwertige Alkohole, wie Ethandiol, Propandiol-1,2 und -1,3, Diethylenglykol, Dipropylenglykol, Butandiol-1,4, Hexandiol-1,6, Glycerin, Trimethylolpropan, Pentaerythrit, Sorbit und Saccharose.

Die Polyetherpolyole besitzen eine Funktionalität von vorzugsweise 2 bis 6 und insbesondere 2 bis 4 und Molekulargewichte von 400 bis 3000, vorzugsweise 400 bis 2000.

Als Polyetherpolyole eignen sich ferner polymermodifizierte Polyetherpolyole, vorzugsweise Pfropfpolyetherpolyole, insbesondere solche auf Styrol- und/oder Acrylnitrilbasis, die durch in situ Polymerisation von Acrylnitril, Styrol oder vorzugsweise Mischungen aus Styrol und Acrylnitril, z.B. im Gewichtsverhältnis 90 : 10 bis 10 : 90, vorzugsweise 70 : 30 bis 30 : 70, in zweckmäßigerweise den vorgenannten Polyether-polyolen nach allgemein bekannten Verfahren hergestellt werden, sowie Polyetherpolyoldispersionen, die als disperse Phase, üblicherweise in einer Menge von 1 bis 50 Gew.%, vorzugsweise 2 bis 25 Gew.%, enthalten: z.B. Polyharnstoffe, Polyhydrazide, tert.-Aminogruppen gebunden enthaltende Polyurethane und/oder Melamin.

Geeignete Polyesterpolyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen, und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht:

Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure. Beispiele für zwei-und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyester-polyole aus Lactonen, z.B. ε-Caprolacton oder Hydroxycarbonsäuren, z.B. ω-Hydroxycapronsäure.

Zur Herstellung der Polyesterpolyole können die organischen, z.B. aromatischen und vorzugsweise aliphatischen, Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgas, wie z.B. Stickstoff, Kohlenmonoxid, Helium, Argon u.a., in der Schmelze bei Temperaturen von 150 bis 250°C, vorzugsweise 180 bis 220°C gegebenenfalls unter vermindertem Druck bis zu der gewünschten Säurezahl, die vorteilhafterweise kleiner als 10, vorzugsweise kleiner als 2 ist, polykondensiert werden. Nach einer bevorzugten Ausführungsform wird das Veresterungsgemisch bei den obengenannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, xylol oder Chlorbenzol, zur azeotropen Abdestillation des Kondensationswassers durchgeführt werden.

Zur Herstellung der Polyesterpolyole werden die organischen Polycarbonsäuren und/oder -derivate und mehrwertigen Alkohole vorteilhafterweise im Molverhältnis von 1 : 1 bis 1,8, vorzugsweise 1 : 1,05 bis 1,2, polykondensiert.

Die erhaltenen Polyesterpolyole besitzen vorzugsweise eine Funktionalität von 2 bis 4, insbesondere 2 bis 3, und ein Molekulargewicht von 480 bis 3000, vorzugsweise 600 bis 2000 und insbesondere 600 bis 1500.

Als hydroxylgruppenhaltige Polyacetale kommen z.B. die aus Glykolen, wie Diethylenglykol, Triethylenglykol, 4,4'-Dihydroxyethoxy-diphenyl-dimethylmethan, Hexandiol und Formaldehyd herstellbaren Verbindungen in Frage. Auch durch Polymerisation cyclischer Acetale lassen sich geeignete Polyacetale herstellen.

Als Hydroxylgruppen aufweisende Polycarbonate kommen solche der an sich bekannten Art in Betracht, die beispielsweise durch Umsetzung von Diolen, wie Propandiol-1,3, Butandiol-1,4 und/oder Hexandiol-1,6, Diethylenglykol, Triethylenglykol oder Tetraethylenglykol mit Diarylcarbonaten, z.B. Diphenylcarbonat, oder Phosgen hergestellt werden können. Zu den Polyesteramiden zählen z.B. die aus mehrwertigen, gesättigten und/oder ungesättigten Carbonsäuren bzw. deren Anhydriden und mehrwertigen gesättigten und/oder ungesättigten Aminoalkoholen oder Mischungen aus mehrwertigen Alkoholen und Aminoalkoholen und/oder Polyaminen gewonnenen, vorwiegend linearen Kondensate. Geeignete Polyetherpolyamine können aus den obengenannten Polyetherpolyolen nach bekannten Verfahren hergestellt werden. Beispielhaft genannt seien die bekannte Cyanoalkylierung von Polyoxyalkylen-polyolen und anschließende Hydrierung des gebildeten Nitrils oder die bekannte teilweise oder vollständige Aminierung von Polyoxyalkylenpolyolen mit Aminen oder Ammoniak in Gegenwart von Wasserstoff und Katalysatoren.

Besonders bevorzugt werden als Polyole (ii) Polyetherpolyalkohole eingesetzt, beispielsweise Polytetrahydrofuran, Polyetherpolyalkohole, die hergestellt werden durch übliche, im folgenden beschriebene Anlagerung von Alkylenoxiden an Startermoleküle, wobei zum Abschluß Ethylenoxid angelagert wird, womit durch die endständigen Ethylenoxideinheiten die erfindungsgemäßen primären Hydroxylgruppen in den Polyetherpolyalkoholen erzeugt werden.

Zusätzlich zu dem Polyalkohol (ii), können gegebenenfalls weitere übliche Polyole, d.h. Verbindungen mit mindestens zwei Hydroxylgruppen, mit Molekulargewichten von 400 bis 8000 verwendet werden, die weniger als 50% primäre Hydroxylgruppen, bezogen auf alle in der Verbindung enthaltenen Hydroxylgruppen, aufweisen. Auch diese gegebenenfalls zusätzlich zu (ii) einzusetzenden Polyole weisen per Definition keine primären Amingruppen auf.

Bevorzugt weist die Summe der eingesetzten erfindungsgemäßen Polyalkoholen (ii) und gegebenenfalls Polyole zusätzlich zu diesen Polyalkohole mit einem Molekulargewicht von 400 bis 8000 im Mittel mindestens 50 % primäre Hydroxylgruppen, bezogen auf alle in diesen Verbindungen enthaltenen Hydroxylgruppen, auf.

Als erfindungsgemäße Verbindung (iii), die mindestens eine primäre Amingruppen aufweist, besitzen üblicherweise Molekulargewichte von 50 bis 2000, bevorzugt 60 bis 500. Bevorzugt weisen die Verbindungen (iii) mindestens 1 primäre Amingruppe, besonders bevorzugt 1 bis 2 primäre Amingruppen auf. Gegebenenfalls können die Verbindungen (iii) zusätzlich zu den primären Amingruppen weitere gegenüber Isocyanaten reaktive Gruppen, beispielsweise Hydroxylgruppen und/oder sekundäre Amingruppen enthalten. Bevorzugt weisen die Verbindungen (iii) allerdings ausschließlich primäre Amingruppen als gegenüber Isocyanaten reaktive Gruppen auf. Beispielsweise können folgende Verbindungen als (iii) verwendet werden:
Aliphatische, cycloaliphatische, araliphatische und/oder aromatische Mono- und/oder Diamine wie beispielsweise Butylamin, Pentylamin, Hexylamin, Butylendiamin, Hexamethylendiamin, Cyclohexylamin, Ethoxy-alkylamine, Methoxy-alkylamine, N,N-Dimethylpropylendiamin und/oder Benzylamin. Bevorzugt werden N,N-Dimethylpropylendiamin und/oder Benzylamin eingesetzt.

Bevorzugt beträgt der Stickstoffanteil enthaltend in (ii),(iii) und gegebenenfalls den Diolen oder Triolen mit Molekulargewichten < 400 2 bis 8 Gew.-%, besonders bevorzugt 3 bis 6 Gew.-%, bezogen auf das Gewicht von (ii), (iii) und gegebenenfalls den Diolen und/oder Triolen mit Molekulargewichten < 400.

Als gegenüber Isocyanaten reaktive Verbindungen können gegebenenfalls Diole und/oder Triole mit Molekulargewichten <400 als Kettenverlängerungs- und/oder Vernetzungsmittel bei dem erfindungsgemäßen Verfahren eingesetzt werden. Zur Modifizierung der mechanischen Eigenschaften, z.B. der Härte, kann sich jedoch der Zusatz von Kettenverlängerungsmitteln, Vernetzungsmitteln oder gegebenenfalls auch Gemischen davon als vorteilhaft erweisen. Die Kettenverlängerungs- und/oder Vernetzungsmittel weisen vorzugsweise ein Molekulargewicht von 60 bis 300 auf. In Betracht kommen beispielsweise aliphatische, cycloaliphatische und/ oder araliphatische Diole mit 2 bis 14, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxy-ethyl)-hydrochinon, Triole, wie 1,2,4-, 1,3,5-Trihydroxy-cyclohexan, Glycerin und Trimethylolpropan und niedermolekulare hydroxylgruppenhaltige Polyalkylenoxide auf Basis Ethylen- und/oder 1,2-Propylenoxid und den vorgenannten Diolen und/oder Triolen als Startermoleküle.

Sofern zur Herstellung der Polyurethanschaumstoffe Kettenverlängerungsmittel, Vernetzungsmittel oder Mischungen davon Anwendung finden, kommen diese zweckmäßigerweise in einer Menge von 0 bis 20 Gew.-%, vorzugsweise von 2 bis 8 Gew.-%, bezogen auf das Gewicht der insgesamt eingesetzten gegenüber Isocyanaten reaktiven Verbindungen, zum Einsatz.

Als Treibmittel zur Herstellung der Polyurethanschaumstoffe wird erfindungsgemäß (vi) Wasser, das mit Isocyanatgruppen unter Bildung von Kohlendioxid reagiert, eingesetzt, bevorzugt in einer Menge von 0,5 bis 10 Gew.-% Wasser, besonders bevorzugt in einer Menge von 0,6 bis 7 Gew.-% Wasser, jeweils bezogen auf das Gewicht der insgesamt eingesetzten gegenüber Isocyanaten reaktiven Verbindungen. Zusätzlich zum Wasser können bevorzugt übliche weitere Treibmittel, besonders bevorzugt physikalisch wirkende Treibmittel, verwendet werden. Geeignet sind als solche physikalisch wirkenden Treibmittel Flüssigkeiten, welche gegenüber den organischen, gegebenenfalls modifizierten Polyisocyanaten inert sind und Siedepunkte unter 100°C, vorzugsweise unter 50°C, insbesondere zwischen -50°C und 30°C bei Atmosphärendruck aufweisen, so daß sie unter dem Einfluß der exothermen Polyadditionsreaktion verdampfen. Beispiele derartiger, vorzugsweise verwendbarer Flüssigkeiten sind Alkane, wie Heptan, Hexan, n- und iso-Pentan, vorzugsweise technische Gemische aus n-und iso-Pentanen, n- und iso-Butan und Propan, Cycloalkane, wie Cyclopentan und/oder Cyclohexan, Ether, wie Furan, Dimethylether und Diethylether, Ketone, wie Aceton und Methylethylketon, Carbonsäurealkylester, wie Methylformiat, Dimethyloxalat und Ethylacetat und halogenierte Kohlenwasserstoffe wie beispielsweise übliche Fluorkohlenwasserstoffe und/oder Chlorkohlenwasserstoffe, wie beispielsweise Dichlormethan. Auch Gemische dieser niedrigsiedenden Flüssigkeiten untereinander und/oder mit anderen substituierten oder unsubstituierten Kohlenwasserstoffen können verwendet werden. Geeignet sind ferner organische Carbonsäuren, wie z.B. Ameisensäure, Essigsäure, Oxalsäure, Ricinolsäure und carboxylgruppenhaltige Verbindungen. Die Treibmittel werden üblicherweise den Komponenten (ii) und/oder (iii) zugesetzt. Sie können jedoch der Isocyanatkomponente oder als Kombination sowohl der Polyolkomponente als auch der Isocyanatkomponente oder Vormischungen dieser Komponenten mit den übrigen Aufbaukomponenten zugesetzt werden. Die eingesetzte Menge des physikalischen wirkenden Treibmittels liegt bevorzugt bei 0,5 bis 25 Gew.-%, besonders bevorzugt 3 bis 15 Gew.-%, jeweils 5 bezogen auf das Gewicht der insgesamt eingesetzten gegenüber Isocyanaten reaktiven Verbindungen. Das Wasser als Treibmittel wird vorzugsweise der Polyolkomponente zugesetzt.

Als Katalysatoren zur Herstellung der Polyurethanschaumstoffe werden mindestens ein tertiäres Amin (iv) und/oder mindestens ein Metallsalz (v) eingesetzt, bevorzugt mindestens ein tertiäres Amin (iv) und mindestens ein Metallsalz (v), die die Reaktion von Isocyanaten mit den gegenüber Isocyanaten reaktiven Verbindungen stark beschleunigen, wobei vorzugsweise ein Gesamtkatalysatorgehalt von 0,001 bis 15 Gew.-%, insbesondere 0,05 bis 6 Gew.-%, bezogen auf das Gewicht der insgesamt eingesetzten gegenüber Isocyanaten reaktiven Verbindungen, verwendet wird. Bevorzugt werden 0,1 bis 8 Gew.-% mindestens eines tertiären Amins und/oder, bevorzugt und, 0,01 bis 3 Gew.-% mindestens eines Metallsalzes eingesetzt, wobei sich die Gewichtsangaben auf das Gewicht der insgesamt eingesetzten gegenüber Isocyanaten reaktiven Verbindungen beziehen.

Als tertiäre Amine (iv) können beispielsweise Triethylamin, Tributylamin, Dimethylbenzylamin, Dicyclohexylmethylamin, Dimethylcyclohexylamin, N,N,N',N'-Tetramethyl-diamino-diethylether, Bis-(dimethylaminopropyl)-harnstoff, N-Methyl- bzw. N-Ethylmorpholin, N-Cyclohexylmorpholin, N,N,N',N'-Tetramethylethylendiamin, N,N,N',N'-Tetramethylbutandiamin, N,N,N',N'-Tetramethylhexandiamin-1,6, Pentamethyldiethylentriamin, Dimethylpiperazin, N-Dimethylaminoethylpiperidin, 1,2-Dimethylimidazol, 1-Azabicyclo-(2,2,0)-octan, 1,4-Diazabicyclo-(2,2,2)-octan(Dabco) und Alkanolaminverbindungen, wie Triethanolamin, Triisopropanolamin, N-Methyl- und N-Ethyl-diethanolamin, Dimethylaminoethanol, 2-(N,N-Dimethylaminoethoxy)ethanol, N,N',N"-Tris-(dialkylaminoalkyl)hexahydrotriazine, z.B. N, N', N"-Tris-(dimethylaminopropyl)-s-hexahydrotriazin, verwendet werden. Bevorzugt werden als (iv) Triethylendiamin, Pentamethylendiethylentriamin und/oder Bis(dimethylamino)ether eingesetzt.
Als Metallsalze (v) können beispielsweise anorganische und/oder organische Verbindungen des Eisens, Bleis, Zinks, und/oder Zinns in üblichen Oxidationsstufen des Metalls eingesetzt werden, beispielsweise Eisen(II)-chlorid, Zinkchlorid, Bleioctoat und vorzugsweise Zinnsalze, wie Zinndioctoat, Zinndiethylhexoat, Dibutylzinndilaurat und/oder Dibutyldilaurylzinnmercaptid. Besonders bevorzugt werden als (v) Dibutylzinndilaurat, Zinndioctoat und/oder Dibutyldilaurylzinnmercaptid eingesetzt.

Zusätzlich zu den erfindungsgemäßen Katalysatoren können weitere Katalysatoren eingesetzt werden, beispielsweise Amidine, wie 2,3-Dimethyl-3,4,5,6-tetrahydropyrimidin, Tetraalkylammoniumhydroxide, wie Tetramethylammoniumhydroxid, Alkalihydroxide, wie Natriumhydroxid und Alkalialkoholate, wie Natriummethylat und Kaliumisopropylat, sowie Alkalisalze von langkettigen Fettsäuren mit 10 bis 20 C-Atomen und gegebenenfalls seitenständigen OH-Gruppen.
Der Reaktionsmischung zur Herstellung der Polyurethanschaumstoffe können gegebenenfalls noch weitere Hilfsmittel und/oder Zusatzstoffe einverleibt werden. Genannt seien beispielsweise oberflächenaktive Substanzen, Schaumstabilisatoren, Zellregler, Füllstoffe, Farbstoffe, Pigmente, Flammschutzmittel, Hydrolyseschutzmittel, fungistatische und bakteriostatisch wirkende Substanzen. Als oberflächenaktive Substanzen kommen z.B.
Verbindungen in Betracht, welche zur Unterstützung der Homogenisierung der Ausgangsstoffe dienen und gegebenenfalls auch geeignet sind, die Zellstruktur der Kunststoffe zu regulieren. Genannt seien beispielsweise Emulgatoren, wie die Natriumsalze von Ricinusölsulfaten oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzoloder Dinaphthylmethandisulfonsäure und Ricinolsäure; Schaumstabilisatoren, wie Siloxan-oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnußöl, und Zellregler, wie Paraffine, Fettalkohole und Dimethylpolysiloxane. Zur Verbesserung der Emulgierwirkung, der Zellstruktur und/oder Stabilisierung des Schaumes eignen sich ferner die oben beschriebenen oligomeren Acrylate mit Polyoxyalkylen- und Fluoralkanresten als Seitengruppen. Die oberflächenaktiven Substanzen werden üblicherweise in Mengen von 0,01 bis 5 Gew.-%, bezogen auf 100 Gew.-% der insgesamt eingesetzten gegenüber Isocyanaten reaktiven Verbindungen, angewandt. Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im einzelnen seien beispielhaft genannt: anorganische Füllstoffe wie silikatische Mineralien, beispielsweise Schichtsilikate wie Antigorit, Serpentin, Hornblenden, Amphibole, Chrisotil und Talkum, Metalloxide, wie Kaolin, Aluminiumoxide, Titanoxide und Eisenoxide, Metallsalze, wie Kreide, Schwerspat und anorganische Pigmente, wie Cadmiumsulfid und Zinksulfid, sowie Glas u.a.. Vorzugsweise verwendet werden Kaolin (China Clay), Aluminiumsilikat und Copräzipitate aus Bariumsulfat und Aluminiumsilikat sowie natürliche und synthetische faserförmige Mineralien wie Wollastonit, Metall- und insbesondere Glasfasern verschiedener Länge, die gegebenenfalls geschlichtet sein können. Als organische Füllstoffe kommen beispielsweise in Betracht: Kohle, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstoffasern. Die anorganischen und organischen Füllstoffe können einzeln oder als Gemische verwendet werden und werden der Reaktionsmischung vorteilhafterweise in Mengen von 0,5 bis 50 Gew.%, vorzugsweise 1 bis 40 Gew.%, bezogen auf das Gewicht der Isocyanate und dem Gewicht der insgesamt eingesetzten gegenüber Isocyanaten reaktiven Verbindungen, einverleibt, wobei jedoch der Gehalt an Matten, Vliesen und Geweben aus natürlichen und synthetischen Fasern Werte bis 80 Gew.-% erreichen kann. Geeignete Flammschutzmittel sind beispielsweise Trikresylphosphat,Tris-(2-chlorethyl)phosphat, Tris-(2-chlorpropyl)phosphat, Tris(1,3-dichlorpropyl)phosphat, Tris-(2,3-dibrompropyl)phosphat, Tetrakis-(2-chlorethyl)-ethylendiphosphat, Dimethylmethanphosphonat, Diethanolaminomethylphosphonsäurediethylester sowie handelsübliche halogenhaltige Flammschutzpolyole. Außer den bereits genannten halogensubstituierten Phosphaten können auch anorganische oder organische Flammschutzmittel, wie roter Phosphor, Aluminiumoxidhydrat, Antimontrioxid, Arsenoxid, Ammoniumpolyphosphat und Calciumsulfat, Blähgraphit oder Cyanursäurederivate, wie z.B. Melamin, oder Mischungen aus mindestens zwei Flammschutzmitteln, wie z.B. Ammoniumpolyphosphaten und Melamin sowie gegebenenfalls Maisstärke oder Ammoniumpolyphosphat, Melamin und Blähgraphit und/oder gegebenenfalls aromatische Polyester zum Flammfestmachen der Polyisocyanat-polyadditionsprodukte verwendet werden. Im allgemeinen hat es sich als zweckmäßig erwiesen, 5 bis 50 Gew.-%, vorzugsweise 5 bis 25 Gew.-%, der genannten Flammschutzmittel, bezogen auf das Gewicht der insgesamt eingesetzten gegenüber Isocyanaten reaktiven Verbindungen, zu verwenden.

Zur Herstellung der erfindungsgemäßen Polyurethanschaumstoffe werden die Isocyanate, (ii) und (iii) sowie gegebenenfalls die Kettenverlängerungs- und/oder Vernetzungsmitteln mit einem Molekulargewicht <400 in solchen Mengen zur Umsetzung gebracht, daß das Äquivalenzverhältnis von NCO-Gruppen der Isocyanate zur Summe der reaktiven Wasserstoffatome der Mischung und gegebenenfalls der Kettenverlängerungs- und/oder Vernetzungsmittel 0,85 bis 1,25 : 1, vorzugsweise 0,95 bis 1,15 : 1 und insbesondere 1 bis 1,05 : 1, beträgt. Falls die Polyurethanhartschaumstoffe zumindest teilweise Isocyanuratgruppen gebunden enthalten, wird üblicherweise ein Verhältnis von NCO-Gruppen zur Summe der reaktiven Wasserstoffatome von 1,5 bis 60 : 1, vorzugsweise 1,5 bis 8 : 1, angewandt.

Die Polyurethanschaumstoffe werden vorteilhafterweise nach dem one shot-Verfahren, beispielsweise mit Hilfe der Hochdruck- oder Niederdruck-Technik in offenen oder geschlossenen Formwerkzeugen, beispielsweise metallischen Formwerkzeugen, hergestellt. Üblich ist auch das kontinuierliche Auftragen des Reaktionsgemisches auf geeigneten Bandstraßen zur Erzeugung von Paneelen.

Als besonders vorteilhaft hat es sich erwiesen, nach dem Zweikomponentenverfahren zu arbeiten und die Komponenten (ii) und (iii), das oder die Treibmittel, die Katalysatoren und gegebenenfalls die Kettenverlängerungs- und/oder Vernetzungsmittel und Hilfs- und/oder Zusatzstoffe in der Komponente (A) zu vereinigen und als Komponente (B) die Isocyanate oder Mischungen aus den Isocyanaten und gegebenenfalls Treibmittel zu verwenden.

Die Ausgangskomponenten werden in Abhängigkeit vom Anwendungsfall bei einer Temperatur von 0 bis 100°C, vorzugsweise von 20 bis 60°C, gemischt und in das offene oder gegebenenfalls unter erhöhtem Druck in das geschlossene Formwerkzeug eingebracht oder bei einer kontinuierlichen Arbeitsstation auf ein Band, das die Reaktionsmasse aufnimmt, aufgetragen. Die Vermischung kann, wie bereits dargelegt wurde,mechanisch mittels eines Rührers oder einer Rührschnecke durchgeführt werden. Die Reaktionstemperatur in dem Formwerkzeug, d.h. die Temperatur, bei der die Umsetzung erfolgt, beträgt bevorzugt 25 bis 35°C.

Nach dem erfindungsgemäßen Verfahren können in Abhängigkeit von den Einsatzstoffen alle üblichen Polyurethanschaumstoffe, insbesondere aber harte und flexible Polyurethanschaumstoffe, hergestellt werden.

Die nach dem erfindungsgemäßen Verfahren hergestellten Polyurethanweichschaumstoffe weisen üblicherweise eine Dichte von 15 bis 100 kg/m³ auf und werden bevorzugt im Möbel- und Automobilbereich eingesetzt, besonders bevorzugt als Polstermaterial.

Bevorzugt werden nach dem erfindungsgemäßen Verfahren weichelastische Polyurethanschaumstoffe entsprechend DIN 7726 hergestellt. Besonders bevorzugt weisen diese Schaumstoffe eine Stauchhärte nach DIN 53477 von kleiner 20 kPas auf.

Die Erfindung wird in den nachfolgenden Ausführungsbeispielen näher erläutert.

In den Tabellen sind die in den Beispielen eingesetzten Reaktionsmischungen dargestellt, wobei die Zahlenangaben zu den Komponenten Polyol(e), Wasser, Katalysator(en) und Stabilisator(en) die Menge der in der jeweiligen A-Komponente enthaltenden Komponenten Polyol(e), Wasser, Katalysator(en) und Stabilisator(en) in Gramm angeben.

Jeweils 100 g der in den Tabellen 1 und 2 dargestellten A-Komponente enthaltend Polyol(e), Wasser, Katalysator(en) und Stabilisator(en) wurden mit der angegebenen Menge Isocyanat mittels eines Laborrührers in einem 500 ml Becher gemischt, in einen 1000 ml Becher gefüllt und zur Reaktion gebracht.

Die Reaktionsparameter wie Temperatur, Startzeit, Abbindezeit und Steigzeit sowie die Dichte und eine Bewertung der hergestellten Schäume sind ebenfalls in den Tabellen angegeben.

**Tabelle 1**

| Beispiel | 1 | 2 | 3 |
|---|---|---|---|
| Polyol 1 [g] | - | - | 45 |
| Polyol 2 [g] | - | - | - |
| Polyol 3 [g] | - | - | 28 |
| Polyol 4 [g] | 90 | - | - |
| Polyol 5 [g] | - | 75 | - |
| Polyol 6 [g] | - | - | - |
| Polyol 7 [g] | - | - | 3 |
| Diethanol-amin [g] | - | 10 | 10 |
| N,N-Dimethyl-propylen-diamin [g] | - | 5 | 5 |
| Wasser [g] | 2 | 2 | 3,5 |
| Kat. 1 [g] | - | - | 0,2 |
| Kat. 2 [g] | 2 | 1,5 | - |
| Kat. 3 [g] | - | - | - |
| Kat. 4 [g] | 6 | 4 | 0,3 |
| Stab. 1 [g] | 0,5 | 0,5 | - |
| Stab. 2 [g] | 0,5 | 0,5 | - |
| Stab. 3 [g] | - | - | 1 |
| Dichlor-methan [g] | - | - | 15 |
| NCO 1 [g] | 168 | 168 | - |
| NCO 2 [g] | - | - | 85 |
| NCO 3 [g] | - | - | - |
| T [oC] | 25 | 25 | 25 |
| t Start [s] | 44 | 35 | 11 |
| t Abb. [s] | 170 | 120 | - |
| t Steig. [s] | 210 | 155 | 120 |
| Dichte [g/l] | - | 64 | 33 |
| | | | |
| Beurteilung des Schaumes | kein Schaum herstellbar | feiner Schaum | mittelfeiner Schaum |

**Tabelle 2**

| Beispiel | 4 | 5 | 6 | 7 |
|---|---|---|---|---|
| Polyol 1 [g] | 44 | 52 | 44 | 44 |
| Polyol 2 [g] | - | - | - | - |
| Polyol 3 [g] | 27 | 27 | 27 | 27 |
| Polyol 4 [g] | - | - | - | - |
| Polyol 5 [g] | - | - | - | - |
| Polyol 6 [g] | 5 | 15 | 5 | 15 |
| Polyol 7 [g] | - | - | - | - |
| Diethanol-amin [g] | 9 | - | 9 | 9 |
| N,N-Dimethyl-propylen-diamin [g] | 9 | - | 9 | 9 |
| Wasser [g] | 3,7 | 3,7 | 6 | 3,7 |
| Kat. 1 [g] | 0,2 | 0,3 | 0,2 | 0,2 |
| Kat. 2 [g] | - | - | - | - |
| Kat. 3 [g] | - | - | - | - |
| Kat. 4 [g] | 0,3 | 0,3 | - | 0,3 |
| Stab. 1 [g] | - | - | - | - |
| Stab. 2 [g] | - | - | - | - |
| Stab. 3 [g] | 1,5 | 1,5 | 1,5 | 1 |
| Dichlor-methan [g] | 15 | 15 | - | 15 |
| NCO 1 [g] | - | - | - | - |
| NCO 2 [g] | 85 | 89 | 85 | - |
| NCO 3 [g] | - | - | - | 90 |
| T [oC] | 25 | 25 | 25 | 25 |
| t Start [s] | 14 | 66 | 11 | 18 |
| t Abb. [s] | - | 120 | - | - |
| t Steig. [s] | 120 | 220 | 120 | 125 |
| Dichte [g/l] | 31 | - | 78 | 35 |
| | | | | |
| Beurteilung des Schaumes | feiner Schaum | kein Schaum herstellbar | grober Schaum | feiner Schaum |

- Polyol 1:: Polyetherol auf der Basis von Gycerin, alkoxyliert mit Propylenoxid und mit Ethylenoxid gekappt, Hydroxylzahl 55 mg KOH/g;
- Polyol 2:: Polyetherol auf der Basis von Gycerin und Propylenoxid, Hydroxylzahl 55 mg KOH/g;
- Polyol 3:: Graft-Polyol, Hydroxylzahl 25, 30 % Feststoffgehalt (Lupranol® 4100, BASF Aktiengesellschaft)
- Polyol 4:: Polyetherol auf der Basis von Succhrose, Gycerin, Wasser und Propylenoxid, Hydroxylzahl 490 mg KOH/g;
- Polyol 5:: Polyetherol auf der Basis von Succhrose, Gycerin und Wasser, alkoxyliert mit Propylenoxid und mit Ethylenoxid gekappt, Hydroxylzahl 490 mg KOH/g;
- Polyol 6:: Polyetherol auf der Basis von Gycerin, alkoxyliert mit Propylenoxid und mit Ethylenoxid gekappt, Hydroxylzahl 550 mg KOH/g;
- Polyol 7:: Polyetherol auf der Basis von Trimethylolpropan, alkoxyliert mit Ethylenoxid, Hydroxylzahl 940 mg KOH/g;
- Kat. 1:: Zinn-Katalysator (Lupragen® D22, BASF Aktiengesellschaft);
- Kat. 2:: Zinn-Katalysator (Formrez UL 32, Firma Witco);
- Kat. 3:: tertiäres Amin (Lupragen® N301, BASF Aktiengesellschaft);
- Kat. 4:: tertiäres Amin (Lupragen® N206, BASF Aktiengesellschaft);
- Stab. 1:: Schaumstabilisator auf Siliconbasis (B 8404, Firma Goldschmidt) ;
- Stab. 2:: Schaumstabilisator auf Siliconbasis (B 8919, Firma Goldschmidt) ;
- Stab. 3:: Schaumstabilisator auf Siliconbasis (B 8870, Firma Goldschmidt);
- NCO 1:: biuretisiertes Hexamethylendiisocyanat (Basonat® HB 100, BASF Aktiengesellschaft);
- NCO 2:: isocyanuratisertes Hexamethylendiisocyanat (Basonat® HI 100, BASF Aktiengesellschaft);
- NCO 3:: zum Isocyanurat trimerisiertes Lysinmethylesterdiisocyanat;
- T [°C] :: Temperatur bei der Umsetzung des Reaktionsgemisches;
- t Start:: Startzeit [s] ;
- t Abb.:: Abbindezeit [s];
- t Steig.:: Steigzeit [s].

Die Vergleichsbeispiele 1 und 5 wurden keine Verbindungen, die primäre Amingruppen aufwiesen, eingesetzt. Zudem wurde in Beispiel 1 keine Komponenten (ii), die über mindestens 50 % primäre Hydroxylgruppen verfügt, verwendet.

Die Beispiele 2, 3, 4, 6 und 7 sind erfindungsgemäße Beispiele.

In diesen Vergleichsbeispielen konnten keine hochwertigen Schäume hergestellt werden. Entweder waren die produzierten Schäume zu grobzellig, oder aber die Schäume kollabierten.

Die erfindungsgemäß hergestellten Schaumstoffe zeigen hervorragende Reaktionsparameter auf. Die hergestellten Schaumstoffe bewiesen sich als lichtecht und sind hervorragend zur Herstellung von Polsterschäumen geeignet.

## Patentansprüche

1. Verfahren zur Herstellung von Schaumstoffen auf der Basis von Polyisocyanat-Polyadditionsprodukten durch Umsetzung von Isocyanaten mit gegenüber Isocyanaten reaktiven Verbindungen in Gegenwart von Treibmitteln und Katalysatoren sowie gegebenenfalls Hilfsmitteln und/oder Zusatzstoffen, **dadurch gekennzeichnet, daß** man
i) Isocyanate mit Isocyanurat- und/oder Biuretstrukturen einsetzt,
als gegenüber Isocyanaten reaktive Verbindungen
ii) mindestens ein Di-und/oder Polyalkohol mit einem Molekulargewicht von 400 bis 8000 und mit mindestens 50% primären Hydroxylgruppen, bezogen auf alle in der Verbindung enthaltenen Hydroxylgruppen,
iii) mindestens eine Verbindung mit mindestens einer primären Amingruppe,
sowie gegebenenfalls Diole und/oder Triole mit Molekulargewichten <400 als Kettenverlängerungs- und/oder Vernetzungsmittel einsetzt, wobei man die Umsetzung in Gegenwart von
iv) mindestens einem tertiären Amin als Katalysator und/oder
v) mindestens einem Metallsalz als Katalysator
sowie
vi) Wasser
durchführt.

2. Verfahren nach Anspruch 1, **dadurch gekennzeichnet, daß** man als (i) isocyanuratisiertes und/oder biuretisiertes Hexamethylen-1,6-diisocyanat, 1-Isocyanato-3,3,5-trimethyl-5-isocyanatomethylcyclohexan und/oder Lysinesterdiisocyanat einsetzt.

3. Verfahren nach Anspruch 1, **dadurch gekennzeichnet, daß** man als (ii) Polyetherpolyalkohole einsetzt.

4. Verfahren nach Anspruch 1, **dadurch gekennzeichnet, daß** man als (iv) Triethylendiamin, Pentamethylen-diethylentriamin und/oder Bis(dimethylamino)ether und als (v) Dibutylzinndilaurat, Zinndioctoat und/oder Dibutyldilaurylzinnmercaptid einsetzt.

5. Verfahren nach Anspruch 1, **dadurch gekennzeichnet, daß** die Summe der eingesetzten hydroxylgruppenhaltigen Verbindungen mit einem Molekulargewicht von 400 bis 8000 im Mittel mindestens 50 % primäre Hydroxylgruppen, bezogen auf alle in diesen Verbindungen enthaltenen Hydroxylgruppen, aufweist.

6. Verfahren nach Anspruch 1, **dadurch gekennzeichnet, daß** der Stickstoffanteil enthaltend in (ii), (iii) und gegebenenfalls den Diolen und/oder Triolen mit Molekulargewichten <400 2 bis 8 Gew.-%, bezogen auf das Gewicht von (ii), (iii) und gegebenenfalls den Diolen und/oder Triolen mit Molekulargewichten < 400 beträgt.

7. Verfahren nach Anspruch 1, **dadurch gekennzeichnet, daß** man die Umsetzung in Gegenwart von 3 bis 15 Gew.-%, bezogen bezogen auf das Gewicht der gegenüber den Isocyanaten reaktiven Verbindungen, eines physikalisch wirkenden Treibmittels durchführt.

8. Schaumstoffe auf der Basis von Polyisocyanat-Polyadditionsprodukten erhältlich durch ein Verfahren gemäß Anspruch 1.

9. Verwendung von Schaumstoffen auf der Basis von Polyisocyanat-Polyadditionsprodukten gemäß Anspruch 8 als Polstermaterial in Möbeln oder in Automobilen.

10. Polstermaterial enthaltend Schaumstoffe auf der Basis von Polyisocyanat-Polyadditionsprodukten gemäß Anspruch 8.

## Claims

1. A process for the production of foams based on polyisocyanate polyadducts by reacting isocyanates with compounds reactive toward isocyanates, in the presence of blowing agents and catalysts and, if required, assistants and/or additives, wherein
(i) isocyanates having isocyanurate and/or biuret structures are used
and, as compounds reactive toward isocyanates,
(ii) at least one di- and/or polyalcohol having a molecular weight of from 400 to 8 000 and having at least 50%, based on all hydroxyl groups contained in the compound, of primary hydroxyl groups,
(iii) at least one compound having at least one primary amino group
and, if required, diols and/or triols having molecular weights of <400, as chain extenders and/or crosslinking agents, are used, the reaction being carried out in the presence of
iv) at least one tertiary amine as a catalyst and/or
v) at least one metal salt as a catalyst
and
vi) water.

2. A process as claimed in claim 1, wherein isocyanuratized and/or biuretized hexamethylene 1,6-diisocyanate, 1-isocyanato-3,3,5-trimethyl-5-isocyanatomethylcyclohexane and/or lysine ester diisocyanate are used as (i).

3. A process as claimed in claim 1, wherein polyether polyalcohols are used as (ii).

4. A process as claimed in claim 1, wherein triethylenediamine, pentamethylenediethylenetriamine and/or bis(dimethylamino) ether are used as (iv) and dibutyltin dilaurate, tin dioctanoate and/or dibutyldilauryltin mercaptide are used as (v).

5. A process as claimed in claim 1, wherein the sum of the hydroxyl-containing compounds used, having a molecular weight of from 400 to 8 000, has on average at least 50%, based on all hydroxyl groups contained in these compounds, of primary hydroxyl groups.

6. A process as claimed in claim 1, wherein the nitrogen content of (ii), (iii) and, if required, the diols and/or triols having molecular weights of <400 is from 2 to 8% by weight, based on the weight of (ii), (iii) and, if required, the diols and/or triols having molecular weights of <400.

7. A process as claimed in claim 1, wherein the reaction is carried out in the presence of from 3 to 15% by weight, based on the weight of the compounds reactive toward the isocyanates, of a physical blowing agent.

8. A foam based on a polyisocyanate polyadduct obtainable by a process as claimed in claim 1.

9. The use of a foam based on a polyisocyanate polyadduct as claimed in claim 8 as upholstery material in furniture or in automobiles.

10. An upholstery material comprising a foam based on a polyisocyanate polyadduct as claimed in claim 8.

## Revendications

1. Procédé de préparation de matières alvéolaires à base de produits de polyaddition de polyisocyanates par réaction d'isocyanates avec des composés réactifs envers les isocyanates en présence d'agents moussants et de catalyseurs ainsi qu'éventuellement d'adjuvants et/ou d'additifs, **caractérisé en ce que** l'on met en oeuvre
i) des isocyanates avec des structures d'isocyanurate ou de biuret,
en tant que composés réactifs envers les isocyanates
ii) au moins un dialcool et/ou polyalcool ayant une masse moléculaire de 400 à 8 000 et ayant au moins 50% de groupes hydroxyles primaires, par rapport à tous les groupes hydroxyles contenus dans le composé,
iii) au moins un composé ayant un groupe amine primaire,
ainsi qu'éventuellement des diols et triols ayant des masses moléculaires < 400 en tant qu'agent extenseur de chaîne et/ou agent de réticulation, la réaction étant réalisée en présence
iv) d'au moins une amine tertiaire en tant que catalyseur et/ou
v) d'au moins un sel métallique en tant que catalyseur
ainsi que
vi) de l'eau.

2. Procédé selon la revendication 1, **caractérisé en ce que** l'on met en oeuvre en tant que dérivé isocyanurate et/ou biuret du 1,6-diisocyanate de hexaméthylene (i), le 1-isocyanato-3,3,5-triméthyl-5-isocyanato-méthylcyclohexane et/ou le diisocyanate d'ester de lysine.

3. Procédé selon la revendication 1, **caractérisé en ce que** l'on met en oeuvre en tant que (ii), des polyétherpolyalcools.

4. Procédé selon la revendication 1, **caractérisé en ce que** l'on met en oeuvre en tant que (iv), la triéthylènediamine, la pentaméthylènediéthylènetriamine, et/ou le bis(diméthylamino)éther et en tant que (v), le dilaurate de dibutylétain, le dioctoate d'étain et/ou le mercaptide de dibutyldilaurylétain.

5. Procédé selon la revendication 1, **caractérisé en ce que** la somme des composés contenant des groupes hydroxyles mis en oeuvre ayant une masse moléculaire de 400 à 8 000 en moyenne, présente au moins 50% de groupes hydroxyles primaires par rapport à tous les groupes hydroxyles contenus dans ces composés.

6. Procédé selon la revendication 1, **caractérisé en ce que** la teneur en azote contenue dans (ii), (iii) et éventuellement dans les diols et/ou triols ayant des masses moléculaires < 400, est de 2 à 8% en poids, par rapport au poids de (ii), (iii) et éventuellement des diols et/ou triols ayant des masses moléculaires < 400.

7. Procédé selon la revendication 1, **caractérisé en ce que** l'on réalise la réaction en présence de 3 à 15% en poids d'un agent moussant à action physique, par rapport au poids des composés réactifs envers les isocyanates.

8. Matières alvéolaires à base de produits de polyaddition de polyisocyanates, que l'on peut obtenir par un procédé selon la revendication 1.

9. Utilisation de matières alvéolaires à base de piroduits de polyaddition de polyisocyanates selon la revendication 8 sous la forme de matière de rembourrage dans les meubles ou dans les automobiles.

10. Matière de rembourrage contenant des matières alvéolaires à base de produits de polyaddition de polyisocyanates selon la revendication 8.
